# FASCICULE DE BREVET EUROPEEN

(11) **EP 4 309 814 B1**
(45) Date de publication et mention de la délivrance du brevet: **05.08.2026**
(21) Numéro de dépôt: 23180055.8
(22) Date de dépôt: 19.06.2023
(51) Int. Cl.: B09B 3/35, B02C 18/14, B02C 18/18, B02C 19/00, B02C 23/04, B02C 23/18, B02C 18/16, A01B 76/00, B09B 101/00, B09B 101/10

(54) **SYSTÈME DE BROYAGE DE CONTENEURS CONTENANT OU AYANT CONTENU UN PRODUIT PHYTOSANITAIRE**
ZERKLEINERUNGSSYSTEM FÜR BEHÄLTER, DIE EIN PFLANZENSCHUTZMITTEL ENTHALTEN ODER ENTHALTEN HABEN
GRINDING SYSTEM FOR CONTAINERS CONTAINING OR HAVING CONTAINED A PHYTOSANITARY PRODUCT

(30) Priorité: 18.07.2022 FR 2207355
(43) Date de publication de la demande: 24.01.2024
(73) Titulaire: Exel Industries, 51200 Epernay (FR)
(72) Inventeur: CHAPRON, Fabien, 51100 Reims (FR)
(74) Mandataire: Bandpay & Greuter

(56) Documents cités:
- WO-A1-2004/009144
- WO-A1-2013/058653
- FR-A1- 2 644 373

## Description

### DOMAINE TECHNIQUE

La présente invention concerne le domaine de la pulvérisation agricole et vise un système de broyage de conteneurs, tels que des bidons, des sacs ou des poches, contenant ou ayant contenu un produit phytosanitaire. Plus précisément, l'invention réside dans un système de broyage de conteneurs configuré pour broyer des conteneurs dans un environnement confiné et sécurisé, permettant de récupérer le broyat et le liquide issus du broyage.

### ETAT DE LA TECHNIQUE

Comme cela est connu, dans le domaine de la pulvérisation agricole, on est amené à incorporer un ou plusieurs produits phytosanitaires, liquides, en granulés ou en poudre, dans une ou plusieurs cuves d'un système de pulvérisation agricole pouvant être automoteur, porté ou traîné.

Notamment, le produit phytosanitaire peut être transféré vers la ou les cuves depuis un ou plusieurs conteneurs, en particulier des bidons, contenant le ou les produits phytosanitaires liquides, en granulés ou en poudre.

De façon générale, les produits phytosanitaires sont introduits dans le pulvérisateur par l'intermédiaire d'une trémie d'incorporation. Cette trémie se présente sous la forme d'un grand entonnoir dans lequel l'opérateur verse directement le contenu des bidons de produit phytosanitaire, manuellement. Ou l'opérateur verse le produit phytosanitaire directement dans le trou d'homme de la cuve du pulvérisateur.

Aussi, il existe des systèmes de transfert étanche dits CTS (pour Closed Transfer System) depuis le bidon vers le pulvérisateur, fonctionnant par gravité ou par aspiration forcée.

Dans les deux cas, l'opérateur doit manipuler les conteneurs de produits phytosanitaires pleins, pouvant peser jusqu'à 20 kg. Avec l'utilisation d'une trémie d'incorporation, cette manipulation se fait avec le conteneur préalablement ouvert ce qui génère un risque de renversement accidentel.

A chaque fois, quel que soit le système employé, les manipulations et la vitesse de vidange limitée diminue le débit de chantier global.

Surtout, une fois le transfert de produit phytosanitaire vers une cuve d'un système de pulvérisation effectué, reste le conteneur, plus ou moins vide, qu'il convient de traiter de façon sécurisée pour l'opérateur. Ainsi, un problème technique posé réside dans le traitement des conteneurs une fois que le transfert de produit phytosanitaire a été effectué. Les conteneurs en question peuvent être vides ou non. L'objectif est de rincer et de réduire en copeaux les conteneurs de façon sécurisée pour l'opérateur, car les produits phytosanitaires peuvent présenter une certaine toxicité.

Il existe donc un besoin pour un système sécurisé de broyage de conteneurs contenant ou ayant contenu un produit phytosanitaire.

Un système apte à broyer des conteneurs est connu du document FR 2644373 A1.

### PRESENTATION DE L'INVENTION

A cet effet, l'invention a pour objet un système de broyage de conteneurs selon la revendication 1.

L'utilisation d'un système de broyage selon l'invention permet d'éviter tout risque de projection de produit phytosanitaire lors du broyage de conteneurs. Le système de broyage selon l'invention permet le broyage de conteneurs vides, partiellement pleins ou pleins de produit phytosanitaire, directement, ainsi que de réduire le volume des déchets.

La présente invention permet ainsi de réduire les risques de pollution lors d'un renversement accidentel d'un conteneur non vide, de réduire significativement les contacts par éclaboussures avec l'opérateur, de réduire le risque de troubles musculosquelettiques par la réduction des manipulations de conteneurs, de réduire le volumes des déchets de conteneurs et d'optimiser le temps total d'incorporation des différents conteneurs de produits phytosanitaires liquides, en granulés ou en poudre dans un système de pulvérisation.

Selon un mode de réalisation, le système de broyage de conteneurs selon l'invention comprend un deuxième dispositif de sécurité configuré pour inhiber l'ouverture du dispositif de fermeture du caisson tant que l'ensemble de buses de rinçage est actif.

Avantageusement, le système de broyage de conteneurs comprend un tamis filtre en amont du tuyau d'aspiration.

Le tamis filtre disposé en partie inférieure du caisson et en amont du tuyau d'aspiration reliant le dispositif à un système de pulvérisation présente une taille de filtration plus fine que le panier filtrant, en adéquation avec le type de pompe équipant le système de pulvérisation, et peut être amovible par l'opérateur pour nettoyage. En variante, le tamis pourrait être rotatif pour essorer les copeaux constituant le broyat, à la manière d'une essoreuse.

Selon un mode de réalisation, qui ne correspond pas à l'invention, le ou les arbres de broyage sont équipés de couteaux couplés à des contre-couteaux.

Les couteaux et contre-couteaux sont notamment configurés pour obtenir une granulométrie du broyat maîtrisée minimum permettant de déchiqueter un conteneur de produit plein.

Avantageusement, les dents sont présentes sur tout le pourtour du ou des disques, régulièrement réparties en dents de scie.

Selon un mode de réalisation, le panier filtrant est disposé immédiatement en aval du ou des arbres de broyage, afin de récupérer le broyat du conteneur, le panier filtrant présentant des parois perforées de manière à permettre le lavage du broyat par l'intermédiaire de buses de l'ensemble de buses.

Selon un mode de réalisation, le panier filtrant est amovible du caisson pour assurer l'évacuation du broyat par l'opérateur. En variante, il peut être prévu un secoueur pour faire bouger les copeaux de broyat au fond du panier filtrant afin de rincer toutes les faces.

Selon un mode de réalisation, le panier filtrant présente une ouverture cylindrique à sa base et est traversé, sensiblement en son milieu, par un système d'évacuation du broyat en continu, le système d'évacuation du broyant étant une vis sans fin ou un vérin poussoir ou un tapis roulant ou tout type de convoyeur adapté.

Avantageusement, la vis sans fin présente sur au moins l'extérieur de sa spirale un élément souple en contact avec le panier filtrant, l'élément souple étant formé de poils de brosse ou d'un joint caoutchouc souple, configuré pour éviter le coincement du broyat.

Selon un mode de réalisation, l'ensemble des buses de rinçage comprend, dans une partie haute du caisson, au moins une buse de rinçage adaptée au lavage de portions supérieures de faces internes de parois du caisson, dans une partie centrale du caisson, au moins une buse de rinçage adaptée au lavage du broyeur, et, dans une partie basse du caisson, au moins une buses de rinçage adaptée au lavage du broyat dans le panier filtrant récupérateur du broyat ainsi qu'au lavage de portions inférieures des faces internes des parois du caisson. En variante, l'eau utilisée sur la partie supérieure et sur la partie centrale intermédiaire peut être d'une bouillie, autrement dit un mélange d'eau et de produit phytosanitaire, provenant d'une cuve principale d'un système de pulvérisation, afin de faire une économie d'eau claire. Selon une autre variante, un prérinçage intégral est réalisé au moyen de bouillie, suivi d'un rinçage à l'eau claire du broyat.

Selon un mode de réalisation, le système de broyage de conteneur comprend un ou des moteurs électriques ou hydrauliques et synchronisés configurés pour entraîner en rotation le ou les arbres de broyage. Tout autre type de moteur peut également être utilisé, tel un moteur mécanique, un moteur thermique, la connexion à une prise de force d'un engin agricole, etc.

La présente invention vise aussi un système de pulvérisation comprenant au moins une cuve destinée à contenir du produit phytosanitaire et au moins une cuve d'eau claire, le système de pulvérisation comprenant un système de broyage tel que brièvement décrit ci-dessus, le tuyau d'aspiration étant relié à la cuve destinée à contenir du produit phytosanitaire et l'ensemble de buses de rinçage étant alimenté en eau par l'intermédiaire d'un tuyau de rinçage reliant l'ensemble de buses à la cuve d'eau claire. Dans la ligne des variantes évoquées ci-dessus, l'ensemble de buse peut également être alimenté en bouillie par l'intermédiaire d'un tuyau dédié, afin d'effectuer un rinçage en partie supérieure et centrale ou un prérinçage.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'un système de broyage, qui ne correspond pas à l'invention, ouvert et vide ;
La figure 2 est une représentation schématique du système de broyage ouvert et avec un bidon plein introduit dans le caisson ;
La figure 3 est une représentation schématique du système de broyage fermé et en fonctionnement ;
La figure 4 est une représentation schématique du système de broyage en phase de rinçage final ;
La figure 5 est une représentation schématique d'un système de broyage selon l'invention ;
La figure 6 est une représentation schématique d'une vue en coupe du système de broyage selon l'invention;
La figure 7 est une vue en perspective de l'intérieur du système de broyage selon l'invention
La figure 8 est une représentation schématique d'une vue de profil d'un disque tournant du système de broyage selon l'invention ;
La figure 9 est une représentation schématique de deux arbres de broyage dans le système de broyage selon l'invention.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

L'invention concerne un système de broyage de conteneurs (bidons, sacs, poches, etc.), contenant ou ayant contenu des produits phytosanitaires, liquides, en granulés ou en poudre, pouvant notamment présenter une toxicité importante pour l'opérateur.

L'invention vise à assurer une meilleure sécurité pour l'opérateur et une meilleure sauvegarde de l'environnement en assurant le broyage de conteneurs contenant ou ayant contenu des produits phytosanitaires de façon sécurisée et confinée. Après broyage, on récupère des copeaux de conteneurs rincés. L'eau de rinçage souillée peut être aspirée pour être incorporée dans une cuve d'un système de pulvérisation.

Il est précisé ici que le système de broyage de conteneurs selon l'invention peut aussi bien être intégré dans un système de pulvérisation ou être un système indépendant dit « stand alone ». Dans ce qui suit, on décrit le système de broyage de conteneurs en tant que tel ; toutes les caractéristiques et variantes décrites ci-après sont prévues pour être compatibles à la fois de la version du système de broyage de conteneurs intégrée à un système de pulvérisation ou de la version « stand alone ».

Les modes de réalisation décrits en détail ci-après sont représentés sous une forme « stand alone » mais ils pourraient tout à fait être intégrés à un système de pulvérisation sans que cela ne change leurs caractéristiques essentielles. En outre, dans ce qui suit, on décrit plus particulièrement le cas où le conteneur se présente sous la forme d'un bidon. Il est évident que le système de broyage de conteneurs selon l'invention s'utilise de façon identique avec d'autres types de conteneurs, comme des sacs ou des poches.

Le système de broyage selon l'invention se présente sous la forme d'un caisson ayant une ouverture d'introduction de conteneurs, notamment de bidons, pouvant être fermée de façon étanche par l'intermédiaire d'un dispositif de fermeture de type trappe ou capot. Notamment, l'ouverture d'introduction présente une dimension adéquate au passage d'un bidon de 20 litres. Le système de broyage est équipé d'au moins un arbre de broyage, d'un ensemble de buses de rinçage et d'un panier de réception du broyat de conteneur.

De préférence, le système de broyage est relié à un système de pulvérisation par un tuyau d'aspiration destiné à incorporer à une cuve du système de pulvérisation l'eau de rinçage souillée ayant été utilisée dans le système de broyage, et par un deuxième tuyau d'amenée d'eau claire sous pression issue par exemple d'une cuve d'eau claire du système de pulvérisation, pour alimenter les buses de rinçage. Alternativement, le deuxième tuyau peut être connecté à un réseau d'alimentation en eau, fixe ou embarqué, indépendant du système de pulvérisation.

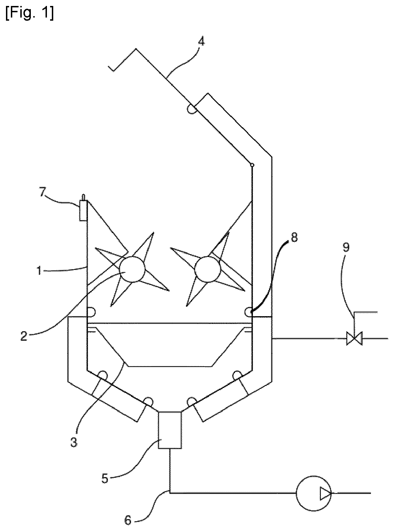

En référence à la figure 1, il est présenté un système de broyage de conteneurs qui ne correspond pas à l'invention. Le caisson 1 présente ici un broyeur équipé de deux arbres de broyages 2 et un panier filtrant 3. Les arbres de broyage 2 sont entraînés via un moteur électrique ou hydraulique ou mécanique ou thermique ou via une connexion à une prise de force d'un engin agricole, etc. Dans une partie supérieure, le caisson 1 comprend une ouverture d'introduction de conteneurs et un dispositif de fermeture du caisson adapté pour fermer l'ouverture d'introduction de conteneurs. Le dispositif de fermeture se présente ici sous la forme d'une trappe 4 articulée présentant de préférence au moins en partie une paroi transparente pour rendre possible un contrôle visuel de l'intérieur du caisson 1. Le dispositif de fermeture est de préférence doté de moyens d'étanchéité, tel qu'un joint torique, de sorte qu'il assure une fermeture étanche du caisson 1. Le caisson 1 est ainsi étanche lorsqu'il est fermé.

Dans une partie inférieure du caisson 1, le système de broyage de conteneurs selon ce mode de réalisation comprend un second filtre 5 relié à l'aspiration d'un système de pulvérisation par l'intermédiaire d'un tuyau 6.

Un premier dispositif de sécurité 7 (décrit ci-après) empêche la mise en rotation des arbres de broyages 2 tant que la trappe 4 n'est pas fermée.

Un ensemble de buses de rinçage 8 est disposé à l'intérieur du caisson 1. L'ensemble de buses 8 peut être activé manuellement via une vanne 9 permettant à de l'eau claire sous pression de rincer l'intérieur du système de broyage. Alternativement, l'ensemble de buses peut être activé automatiquement, au début, en cours, ou en fin de broyage, par exemple après une durée prédéfinie à compter du début du broyage. Notamment, l'ensemble de buses 8 de rinçage comprend, dans une partie haute du caisson, au moins une buse de rinçage adaptée au lavage de portions supérieures de faces internes de parois du caisson 1, dans une partie centrale du caisson, au moins une buse de rinçage adaptée au lavage du broyeur, et, dans une partie basse du caisson 1, au moins une buse de rinçage adaptée au lavage du broyat dans le panier filtrant 3 récupérateur du broyat ainsi qu'au lavage de portions inférieures des faces internes des parois du caisson 1.

Selon un mode de réalisation préféré, le système de broyage de conteneurs comporte un deuxième dispositif de sécurité (non représenté) configuré pour inhiber l'ouverture du dispositif de fermeture du caisson, ici la trappe 4, tant que l'ensemble de buses de rinçage 8 est actif. Grâce au deuxième dispositif de sécurité, on évite toute projection d'eau, voire d'eau souillée, sur l'opérateur. En effet, l'eau sous pression projetée via les buses de rinçage pourrait provoquer des éclaboussures d'eau souillée projetée sur l'opérateur en cas d'ouverture intempestive de la trappe 4. Selon un mode de réalisation, un moyen de mesure de la concentration en produit phytosanitaire est prévu en partie inférieure du caisson 1 pour mesurer la concentration en produit phytosanitaire dans l'eau de rinçage souillée. Dans ce cas, le moyen de mesure de la concentration en produit phytosanitaire dans l'eau peut être relié au deuxième dispositif de sécurité de sorte à inhiber toute ouverture de la trappe 4 tant que la concentration en produit phytosanitaire dans l'eau souillée est supérieure à un seuil prédéfini.

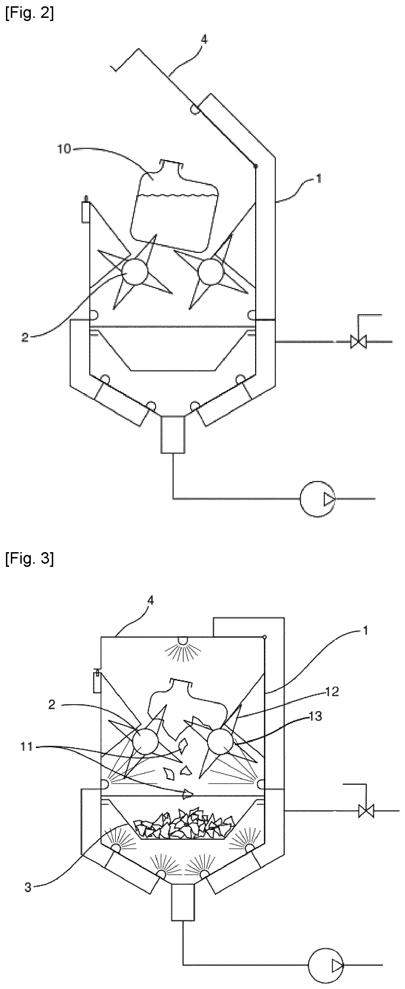

En référence à la figure 2, il est représenté le système de broyage de conteneurs dans le lequel un bidon 10 plein de produit phytosanitaire, ou, alternativement, partiellement plein ou sensiblement vide, est introduit dans le caisson 1 et posé sur les arbres de broyages 2 à l'arrêt. La trappe 4 est ouverte. Tant que la trappe 4 est ouverte, les arbres de broyage ne peuvent pas être mis en rotation, grâce au premier dispositif de sécurité 7 (décrit ci-après).

Lorsque le broyeur est en fonctionnement, le bidon est broyé par les arbres de broyage 2 en rotation, les broyats sont récupérés dans le panier filtrant 3, l'ensemble des buses de rinçage 8 est alimenté en eau claire, permettant de laver les broyats 11 depuis leur création jusqu'à leur récupération dans le panier filtrant 3.

Sur la figure 3, les arbres de broyage 2 sont équipés de couteaux 12 et de contre-couteaux 13 permettant d'obtenir une granulométrie du broyat 11 adéquate, notamment en vue de son rinçage optimal une fois tombé dans le panier filtrant 3.

L'ensemble des buses de rinçage 8 est configuré pour générer des jets d'eau claire suffisamment puissants pour rincer le broyat 11 ainsi que l'ensemble des parois du caisson 1. Le panier filtrant 3 présente des perforations sur ses parois afin de permettre aux jets d'eau de percuter le broyat 11. Par ces perforations, la partie du broyat 11 de faible granulométrie peut donc passer. De ce fait, un second filtre 5 peut être prévu pour permettre de tamiser et récupérer ce type de copeaux de broyat ayant une granulométrie plus fine, avant l'envoi vers le système de pulvérisation par aspiration dans le tuyau 6. Le second filtre 5 peut être couplé à un circuit d'aspiration configuré pour inverser le flux afin de décolmater le second filtre et faciliter son nettoyage.

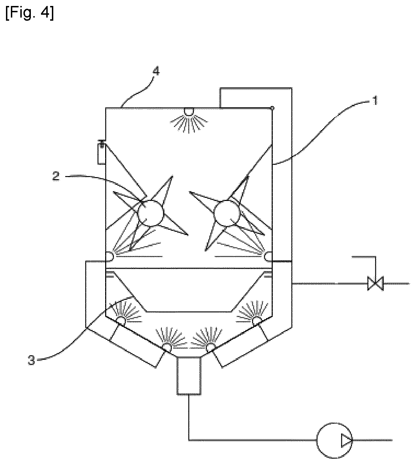

La figure 4 présente le système de broyage vide de tout broyat, en cours de rinçage. L'ensemble des buses de rinçage 8 est activé afin de parfaire le lavage du système.

Afin de garantir la sécurité de l'opérateur, il est nécessaire d'empêcher et / ou d'arrêter la rotation des arbres de broyage 2 si la trappe 4 n'est pas correctement fermée. Le premier dispositif de sécurité 7 est prévu pour détecter la position de la trappe 4. Le premier dispositif de sécurité 7 peut comprendre un contacteur, notamment un contacteur électrique ou hydraulique ou mécanique ou optique, suivant la réalisation du système d'entraînement des arbres de broyage 2. Ainsi, tant que le contacteur détecte que la trappe 4 est ouverte, l'activation des arbres de broyage est inhibée, autrement dit impossible.

Dans l'optique d'optimiser le débit de chantier et réduire les manipulations de l'opérateur, la mise en rotation des arbres de broyages 2 et l'activation des buses de rinçage 8 peuvent être automatisées suivant un cycle automatique prédéfini. Par exemple, le système de broyage peut comprendre un module de séquençage configuré de sorte que, le système de broyage étant sous tension, les arbres de broyage 2 et l'ensemble de buses 8 de rinçage sont activés automatiquement sur détection de la fermeture correcte de la trappe 4. Notamment, les arbres de broyage 2 et l'ensemble de buses 8 peuvent s'arrêter automatiquement après avoir fonctionné pendant un cycle de broyage et un cycle de rinçage ayant une durée respective prédéterminée.

Une fois le cycle de broyage et le cycle de rinçage terminés, l'opérateur doit vider le broyat 11 contenu dans le panier filtrant 3. Ce panier filtrant 3 peut coulisser tel un tiroir sur un des côtés du caisson 1. Un troisième dispositif de sécurité peut également être prévu pour sécuriser cette ouverture.

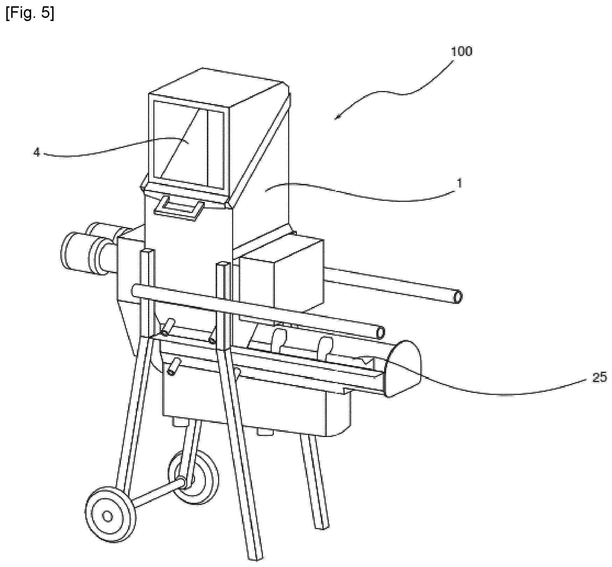

Dans une variante, le panier 3 peut se vider à l'aide d'une vis sans fin en continu pour éviter à l'opérateur d'évacuer le broyat manuellement. Dans ce cas, le panier 3 peut être fixe. La vis sans fin 25 est représentée ci-après sur les figures 5, 6, 7 montrant un système de broyage selon l'invention. Notamment, la vis sans fin 25 présente sur au moins l'extérieur de sa spirale un élément souple en contact avec le panier filtrant 3, l'élément souple étant formé de poils de brosse ou d'un joint caoutchouc souple, configuré pour éviter le coincement du broyat.

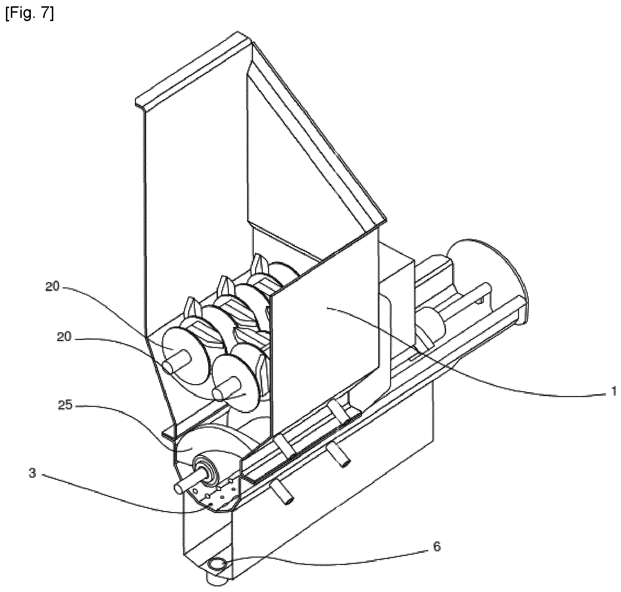

Un mode de réalisation du système de broyage selon l'invention est représenté sur les figures 5 à 9. A la différence dumode de réalisation précédent, qui ne correspond pas à l'invention, comme représenté sur les figures 7 à 9 notamment, les arbres de broyage 20 sont ici équipés de disques 22 tournants et dentés. Seul le broyeur, autrement dit le ou les arbres de broyage, diffèrent. Les autres aspects du système de broyage déjà décrits restent valables pour le deuxième mode de réalisation. Les arbres de broyage 20 sont entraînés en rotation par un ou des moteurs 24, électriques ou hydrauliques ou, alternativement thermique. Alternativement, les arbres de broyage 20 peuvent être entraînés au moyen d'une connexion à une prise de force d'un engin agricole.

Le système de broyage de conteneurs 100 est également représenté en version « stand alone ». Il pourrait toutefois, comme le système de broyage décrit ci-dessus, être intégré à un système de pulvérisation. Le système de broyage de conteneurs 100 est ici agencé sur un châssis comprenant des roulettes pour améliorer sa mobilité.

De façon similaire à ce qui a été décrit dans le système de broyage ci-dessus, le système de broyage de conteneurs 100 présente un caisson 1 ayant une ouverture d'introduction de conteneurs adaptée pour être fermée par un dispositif de fermeture se présentant sous la forme d'une trappe 4 articulée.

Un bidon peut être introduit via la trappe 4 ouverte et disposé sur les arbres de broyage 20. Le premier dispositif de sécurité (non représenté ici) permet d'inhiber le fonctionnement du broyeur. Autrement dit, le dispositif de sécurité empêche la mise en rotation des arbres de broyage 20 tant que la trappe 4 n'est pas fermée, notamment de façon sécurisée et étanche.

Lorsque la trappe est fermée, le broyeur peut être activé. Les arbres de broyage 20 sont alors mis en rotation par les moteurs 24, entraînant avec eux les disques tournants 21 dont les périphéries en dents 22 de scie sont adaptées pour broyer le bidon, que le bidon voit vide, partiellement plein ou plein.

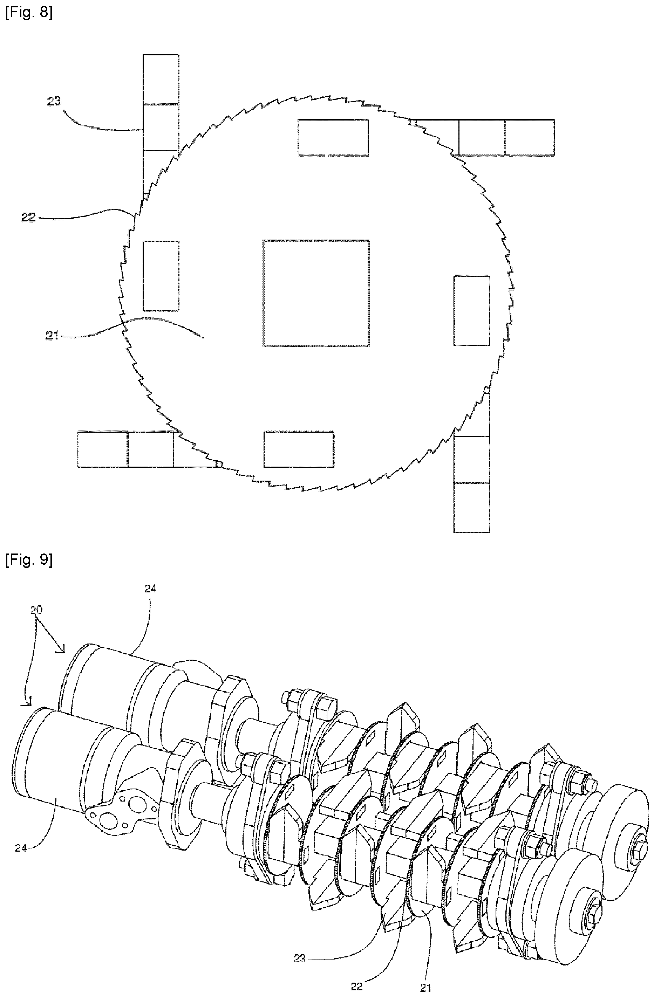

La figure 8 montre un disque 21 tournant vu de profil. Des dents de scie 22 sont présentes sur toute la périphérie du disque 21 tournant.

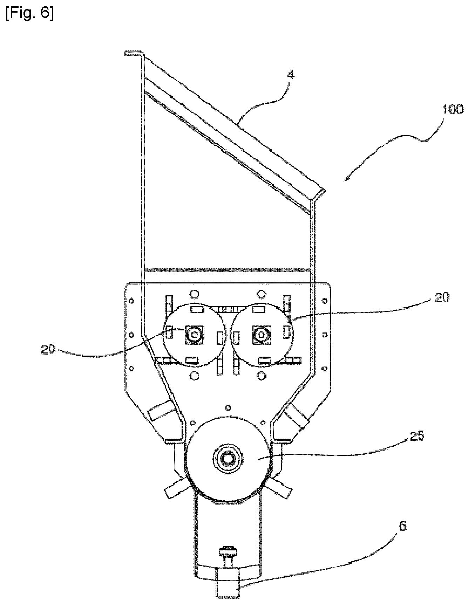

Plus précisément, en référence à la figure 6, 7 ou 9, le broyeur peut présenter deux arbres de broyage 20 disposés parallèlement l'un à l'autre dans une partie centrale du caisson 1. Chaque arbre de broyage 20 est équipé d'une pluralité de disques 21 tournants, orthogonaux à l'axe de l'arbre de broyage 20, espacés et parallèles entre eux. Chaque disque 21 tournant présente sur sa périphérie les dents 22 de scie déjà évoquées.

Chaque arbre de broyage 20 comprend ainsi, dans le mode de réalisation représenté, un ensemble de disques 21 tournants et dont la périphérie est en dents de scie. Entre chaque paire de disques 21 peuvent être prévus des crocs 23 permettant de rabattre le bidon ou les morceaux de bidon entre les arbres de broyage 20 afin d'être déchiqueté par les dents 22 de scie. Les disques 21 tournants et les crocs 23 d'un arbre de broyage 20 et ceux de l'autre arbre de broyage 20 sont disposés en quinconce, comme représenté sur la figure 8 notamment. Par exemple, entre chaque paire de disques 21, on dispose quatre crocs désaxés s'étendant sur un axe parallèle à une tangente aux disques 21 et répartis tous les 90°.

Dans le système de broyage selon l'invention le fonctionnement du premier dispositif de sécurité est identique.

De même, le fonctionnement de l'ensemble de buses de rinçage est similaire à celui décrit pour le mode de réalisation précédent. Le deuxième dispositif de sécurité configuré pour empêcher l'ouverture du caisson 1 tant que l'ensemble de buses de rinçage est actif est également de préférence présent.

Également, l'eau de rinçage souillée récupérée en partie inférieure du système de broyage est de préférence aspirée via un tuyau 6 pour être incorporée dans une cuve d'un système de pulvérisation. A cette fin, il peut être prévu un système d'aspiration relie le tuyau 6 à un point en aval d'une trémie d'incorporation du système de pulvérisation. Un tel système d'aspiration est par exemple réalisé au moyen d'un venturi alimenté en pression par une pompe du système de pulvérisation et aspirant le contenu de la trémie.

L'alimentation en eau claire se fait toujours soit via un tuyau d'amenée acheminant de l'eau claire sous pression issue d'une cuve d'un système de pulvérisation ou issue d'un réseau d'alimentation en eau externe, fixe ou embarqué.

La présente invention vise aussi un système de pulvérisation intégrant un système de broyage tel que décrit en détail précédemment. Dans ce cas, le tuyau 6 est relié à une cuve du système de pulvérisation et l'ensemble de buses de rinçage 8 est alimenté en eau via un tuyau de rinçage le reliant à une cuve d'eau claire du système de pulvérisation.

Il est précisé que pour les modes de réalisation, il est de préférence également prévu, avant l'évacuation finale des copeaux constitutifs du broyat de conteneurs, un système de séchage par centrifugation ou par un dispositif de soufflerie d'air, afin d'éliminer le reliquat d'eau souillée qui se trouve dans le broyat.

## Revendications

1. Système de broyage de conteneurs comprenant un caisson équipé d'un dispositif de fermeture (4), le caisson (1) comprenant une ouverture d'introduction de conteneur disposée dans une partie haute du caisson et apte à être fermée par le dispositif de fermeture (4), et le caisson (1) comprenant, dans une partie basse du caisson (1), un ensemble de parois convergentes vers un tuyau d'aspiration (6) apte à être relié à une cuve d'un système de pulvérisation, le système de broyage comprenant un broyeur disposé dans une partie centrale du caisson (1), le système de broyage comprenant également un panier filtrant récupérateur du broyat issu du broyage de conteneurs, et un ensemble de buses de rinçage, le broyeur étant **caractérisé en ce qu'**il comprend deux arbres de broyage parallèles pour déchiqueter des conteneurs en copeaux, les arbres de broyage étant équipés de disques tournants équipés de dents, chaque arbre de broyage comprenant une pluralité de disques tournants orthogonaux à l'arbre de broyage, espacés et parallèles entre eux, avec au moins un croc désaxé entre chaque paire de disques tournants, les disques tournants et les crocs désaxés respectifs de chaque arbre de broyage étant disposés en quinconce, **en ce que** le dispositif de fermeture est couplé à un premier dispositif de sécurité, et **en ce que** le système de broyage de conteneurs est configuré de sorte que suite à l'introduction d'un conteneur dans le caisson en vue de son broyage, le premier dispositif de sécurité inhibe le fonctionnement du broyeur tant que le dispositif de fermeture n'assure pas la fermeture effective du caisson.

2. Système de broyage de conteneurs selon la revendication 1, comprenant un deuxième dispositif de sécurité configuré pour inhiber l'ouverture du dispositif de fermeture (4) du caisson (1) tant que l'ensemble de buses de rinçage (8) est actif.

3. Système de broyage de conteneurs selon l'une des revendications 1 à 2, comprenant un tamis filtre (5) en amont du tuyau d'aspiration (6).

4. Système de broyage de conteneurs selon la revendication 1, dans lequel les dents (22) sont présentes sur tout le pourtour du ou des disques (21), régulièrement réparties en dents de scie.

5. Système de broyage de conteneur selon l'une des revendications précédentes, **caractérisé en ce que** le panier filtrant (3) est disposé immédiatement en aval du ou des arbres de broyage (2, 20), afin de récupérer le broyat du conteneur, le panier filtrant (3) présentant des parois perforées de manière à permettre le lavage du broyat par l'intermédiaire de buses de l'ensemble de buses (8).

6. Système de broyage de conteneur selon la revendication précédente, **caractérisé en ce que** le panier filtrant (3) est amovible du caisson (1) pour assurer l'évacuation du broyat par l'opérateur.

7. Système de broyage de conteneur selon la revendication 5 ou 6 dans lequel le panier filtrant (3) présente une ouverture cylindrique à sa base et est traversé, sensiblement en son milieu, par un système d'évacuation du broyat en continu, le système d'évacuation du broyant étant une vis sans fin (25) ou un vérin poussoir ou un tapis roulant.

8. Système de broyage de conteneur selon la revendication précédente 7, le système d'évacuation du broyat étant une vis sans fin (25), dans lequel la vis sans fin (25) présente sur au moins l'extérieur de sa spirale un élément souple en contact avec le panier filtrant (3), l'élément souple étant formé de poils de brosse ou d'un joint caoutchouc souple, configuré pour éviter le coincement du broyat.

9. Système de broyage de conteneur selon l'une des revendications précédentes, dans lequel l'ensemble des buses de rinçage (8) comprend, dans une partie haute du caisson, au moins une buse de rinçage adaptée au lavage de portions supérieures de faces internes de parois du caisson, dans une partie centrale du caisson, au moins une buse de rinçage adaptée au lavage du broyeur, et, dans une partie basse du caisson, au moins une buses de rinçage adaptée au lavage du broyat dans le panier filtrant (3) récupérateur du broyat ainsi qu'au lavage de portions inférieures des faces internes des parois du caisson.

10. Système de broyage de conteneur selon l'une des revendications précédentes, comprenant un ou des moteurs électriques ou hydrauliques (27) et synchronisés configurés pour entraîner en rotation le ou les arbres de broyage (2, 20).

11. Système de pulvérisation comprenant au moins une cuve destinée à contenir du produit phytosanitaire et au moins une cuve d'eau claire, le système de pulvérisation comprenant un système de broyage selon l'une quelconque des revendications précédentes, le tuyau d'aspiration (6) étant relié à la cuve destinée à contenir du produit phytosanitaire et l'ensemble de buses de rinçage (8) étant alimenté en eau par l'intermédiaire d'un tuyau de rinçage reliant l'ensemble de buses (8) à la cuve d'eau claire.

## Patentansprüche

1. Behälter-Zerkleinerungssystem, umfassend einen Kasten, der mit einer Verschlussvorrichtung (4) ausgestattet ist, der Kasten (1) umfassend eine Behältereinführöffnung, die in einem oberen Bereich des Kastens angeordnet ist und geeignet ist, um durch die Verschlussvorrichtung (4) geschlossen zu werden, und der Kasten (1) umfassend in einem unteren Bereich des Kastens (1) eine Anordnung von Wänden, die zu einem Saugrohr (6) konvergieren, das mit einem Tank eines Sprühsystems verbindbar ist, das Zerkleinerungssystem umfassend einen Zerkleinerer, der in einem mittleren Bereich des Kastens (1) angeordnet ist, das Zerkleinerungssystem auch umfassend einen Filterkorb zum Auffangen des durch das Zerkleinern von Behältern entstehenden Zerkleinerungsguts und eine Anordnung von Spüldüsen, wobei der Zerkleinerer **dadurch gekennzeichnet ist, dass** er zwei parallele Zerkleinerungswellen zum Zerkleinern von Behältern in Späne umfasst, wobei die Zerkleinerungswellen mit drehenden Scheiben ausgestattet sind, die mit Zähnen ausgestattet sind, jede Zerkleinerungswelle umfassend eine Vielzahl von zu der Zerkleinerungswelle orthogonalen, voneinander beabstandeten und parallelen drehenden Scheiben, mit mindestens einem versetzten Haken zwischen jedem Paar drehender Scheiben, wobei die drehenden Scheiben und die jeweiligen versetzten Haken jeder Zerkleinerungswelle versetzt zueinander angeordnet sind, dadurch, dass die Verschlussvorrichtung mit einer ersten Sicherheitsvorrichtung gekoppelt ist, und dadurch, dass das Behälter-Zerkleinerungssystem konfiguriert ist, sodass nach dem Einführen eines Behälters in den Kasten zum Zwecke seiner Zerkleinerung die erste Sicherheitsvorrichtung den Betrieb des Zerkleinerers so lange verhindert, wie die Verschlussvorrichtung nicht den tatsächlichen Verschluss des Kastens gewährleistet.

2. Behälter-Zerkleinerungssystem nach Anspruch 1, umfassend eine zweite Sicherheitsvorrichtung, die konfiguriert ist, um das Öffnen der Verschlussvorrichtung (4) des Kastens (1) so lange zu verhindern, wie die Anordnung von Spüldüsen (8) aktiv ist.

3. Behälter-Zerkleinerungssystem nach einem der Ansprüche 1 bis 2, umfassend ein Filtersieb (5) stromaufwärts von dem Saugrohr (6).

4. Behälter-Zerkleinerungssystem nach Anspruch 1, wobei die Zähne (22) über den gesamten Umfang der Scheibe(n) (21) vorhanden und regelmäßig als Sägezähne verteilt sind.

5. Behälter-Zerkleinerungssystem nach einem der vorherigen Ansprüche, **dadurch gekennzeichnet, dass** der Filterkorb (3) unmittelbar stromabwärts von der/den Zerkleinerungswelle(n) (2, 20) angeordnet ist, um das Zerkleinerungsgut des Behälters aufzufangen, wobei der Filterkorb (3) perforierte Wände aufweist, um das Waschen des Zerkleinerungsguts mittels der Düsen der Düsenanordnung (8) zu ermöglichen.

6. Behälter-Zerkleinerungssystem nach dem vorherigen Anspruch, **dadurch gekennzeichnet, dass** der Filterkorb (3) aus dem Kasten (1) entnehmbar ist, um die Entsorgung des Zerkleinerungsguts durch den Bediener zu ermöglichen.

7. Behälter-Zerkleinerungssystem nach Anspruch 5 oder 6, wobei der Filterkorb (3) an seiner Basis eine zylindrische Öffnung aufweist und im Wesentlichen in seiner Mitte von einem System zur kontinuierlichen Entsorgung des Zerkleinerungsguts durchquert wird, wobei das System zur Entsorgung des Zerkleinerungsguts eine Förderschnecke (25), ein Schubzylinder oder ein Förderband ist.

8. Behälter-Zerkleinerungssystem nach dem vorherigen Anspruch 7, wobei das System zur Entsorgung des Zerkleinerungsguts eine Förderschnecke (25) ist, wobei die Förderschnecke (25) an mindestens der Außenseite ihrer Spirale ein flexibles Element aufweist, das mit dem Filterkorb (3) in Kontakt ist, wobei das flexible Element aus Bürstenborsten oder einer flexiblen Gummidichtung gebildet und konfiguriert ist, um ein Verklemmen des Zerkleinerungsguts zu verhindern.

9. Behälter-Zerkleinerungssystem nach einem der vorherigen Ansprüche, die Anordnung von Spüldüsen (8) umfassend in einem oberen Bereich des Kastens mindestens eine Spüldüse, die zum Waschen der oberen Abschnitte der Innenflächen der Kastenwände angepasst ist, in dem mittleren Bereich des Kastens mindestens eine Spüldüse, die zum Waschen des Zerkleinerers geeignet ist, und in dem unteren Bereich des Kastens mindestens eine Spüldüse, die zum Waschen des Zerkleinerungsguts in dem Filterkorb (3) zum Auffangen des Zerkleinerungsguts sowie zum Waschen der unteren Abschnitte der Innenflächen der Kastenwände angepasst ist.

10. Behälter-Zerkleinerungssystem nach einem der vorherigen Ansprüche, umfassend einen oder mehrere elektrische oder hydraulische Motoren (27), die synchronisiert und konfiguriert sind, um die Zerkleinerungswelle(n) (2, 20) in Drehung zu versetzen.

11. Sprühsystem, umfassend mindestens einen Tank, der dazu bestimmt ist, Pflanzenschutzmittel zu enthalten, und mindestens einen Frischwassertank, wobei das Sprühsystem umfassend ein Zerkleinerungssystem nach einem der vorherigen Ansprüche, wobei das Saugrohr (6) mit dem Tank, der dazu bestimmt ist, Pflanzenschutzmittel zu enthalten, verbunden ist und die Anordnung von Spüldüsen (8) über ein Spülrohr, das die Düsenanordnung (8) mit dem Frischwassertank verbindet, mit Wasser versorgt wird.

## Claims

1. A container grinding system comprising a box equipped with a closing device (4), the box (1) comprising a container introduction opening arranged in a top part of the box and capable of being closed by the closing device (4), and the box (1) comprising, in a bottom part of the box (1), a set of walls converging towards a suction pipe (6) capable of being connected to a tank of a spray system, the grinding system comprising a grinder arranged in a central part of the box (1), the grinding system also comprising a filter basket for collecting the ground material resulting from the grinding of containers, and a set of rinse nozzles, the grinder being **characterized in that** it comprises two parallel grinding shafts for grinding containers into chips, the grinding shafts being equipped with rotating discs fitted with teeth, each grinding shaft comprising a plurality of rotating discs perpendicular to the grinding shaft, spaced apart and parallel to one another, with at least one off-axis hook between each pair of rotating discs, the rotating discs and the respective off-axis hooks of each grinding shaft being arranged in a staggered pattern, **in that** the closing device is coupled to a first safety device, and **in that** the container grinding system is configured such that, following the introduction of a container into the box for grinding, the first safety device inhibits the operation of the grinder until the closing device effectively closes the box.

2. The container grinding system of claim 1, comprising a second safety device configured to inhibit opening of the closing device (4) of the box (1) as long as the set of rinse nozzles (8) is active.

3. The container grinding system according to one of claims 1 to 2, comprising a filter sieve (5) upstream of the suction pipe (6).

4. The container grinding system of claim 1, wherein the teeth (22) are present around the entire perimeter of the disc(s) (21), evenly distributed in a saw tooth pattern.

5. The container grinding system according to one of the preceding claims, **characterized in that** the filtering basket (3) is arranged immediately downstream of the grinding shaft(s) (2, 20), in order to recover the ground material from the container, the filtering basket (3) having perforated walls so as to enable the ground material to be washed through nozzles of the set of nozzles (8).

6. The container grinding system according to the preceding claim, **characterized in that** the filtering basket (3) is removable from the box (1) to ensure the discharge of the ground material by the operator.

7. The container grinding system according to claim 5 or 6, wherein the filtering basket (3) has a cylindrical opening at its base and has, substantially in its middle, a continuous ground material discharge system passing therethrough, the ground material discharge system being a worm screw (25) or a pusher cylinder or a conveyor belt.

8. The container grinding system according to the preceding claim 7, the ground material discharge system being a worm screw (25), wherein the worm screw (25) has, on at least the exterior of its spiral, a flexible element in contact with the filtering basket (3), the flexible element being formed of brush bristles or a flexible rubber seal, configured to avoid jamming of the ground material.

9. The container grinding system according to one of the preceding claims, wherein the set of rinse nozzles (8) comprises, in a top part of the box, at least one rinse nozzle adapted to wash upper portions of the inner faces of the walls of the box, in a central part of the box, at least one rinse nozzle adapted to wash the grinder, and, in a bottom part of the box, at least one rinse nozzle adapted to wash the ground material in the filtering basket (3) recovering the ground material as well as to wash lower portions of the inner faces of the walls of the box.

10. The container grinding system according to one of the preceding claims, comprising one or more synchronized electric or hydraulic motor(s) (27) configured to rotatably drive the grinding shaft(s) (2, 20).

11. A spray system comprising at least one tank intended to contain plant protection product and at least one tank of clear water, the spray system comprising a grinding system according to any of the preceding claims, the suction pipe (6) being connected to the tank intended to contain plant protection product and the set of rinse nozzles (8) being supplied with water through a rinse pipe connecting the set of nozzles (8) to the tank of clear water.
